# EUROPEAN PATENT SPECIFICATION

(11) **EP 0 841 471 B1**
(45) Date of publication and mention of the grant of the patent: **09.11.2005**
(21) Application number: 97305149.3
(22) Date of filing: 11.07.1997
(51) Int. Cl.: F01D 11/04, F01D 5/08, F02C 7/16

(54) **Gas turbine and gland transferring cooling medium to the rotor thereof**
Gasturbine und Rotorabdichtung um dem Rotor ein Kühlmedium zuzuführen
Turbine à gaz et garniture d'étanchéité pour le transfert d'un fluide de refroidissement au rotor

(30) Priority: 12.11.1996 US 745542
(43) Date of publication of application: 13.05.1998
(73) Proprietor: GENERAL ELECTRIC COMPANY, Schenectady, NY 12345 (US)
(72) Inventor: Gazzillo, Clement, Schenectady, New York 12306 (US); Croft, Steven John, Ballston Spa, New York 12020 (US); Gau, San-dar, Schenectady, New York 12303 (US); Parent, Denise Marie, Ballston Lake New York 12019 (US)
(74) Representative: Pedder, James Cuthbert

(56) References cited:
- GB-A- 1 164 201
- GB-A- 2 061 413
- US-A- 2 788 951
- US-A- 3 729 930
- US-A- 4 517 804
- US-A- 5 575 617
- US-A- 5 599 026

## Description

The present invention relates generally to land-based gas turbines employing a cooling medium for cooling hot gas path components and more particularly to a steam gland for transferring cooling steam from a stationary supply pipe to the rotating rotor of the gas turbine.

Steam cooling of hot gas path components of a gas turbine has been proposed utilizing available steam from, for example, the heat recovery steam generator and/or steam turbine components of a combined cycle power plant. Steam cooling is advantageous when the steam coolant is provided in a closed circuit whereby the heat energy imparted to the steam as it cools the gas turbine components is recovered as useful work in driving a steam turbine. Steam cooling of hot gas path components of a rotary turbine, however, requires the transfer of the cooling steam from a fixed or stationary supply plenum to a rotating rotor for subsequent distribution to the hot gas path components of the rotor. The transfer must be effective to minimize pressure losses of the cooling steam and to prevent steam leakage into the gas turbine.

US Patent No. 2788951 shows a turbine having a cooling medium gland for transferring cooling medium from a fixed supply to the passage of a rotating rotor.

GB 1164201 shows a labyrinth sealing gland having two seals axially spaced from the sealing medium inlet chamber.

The present invention, seeks to provide a cooling medium gland for transferring cooling medium, such as steam, from a stationary supply pipe or plenum to a rotating shaft or rotor in a manner which minimizes or precludes both pressure losses and cooling medium leakage into the exhaust frame inner barrel cavity.

According to the invention, there is a turbine, comprising:
a rotor carrying hot gas path components for rotation about a rotor axis, said rotor having a passage for supplying a cooling medium to said components and a plurality of cooling medium entry slots opening generally radially about said rotor in communication with said rotor passage; and
a cooling medium gland for transferring cooling medium from a fixed supply to the passage of the rotating rotor;
said gland including a cooling medium inlet supply scroll about said rotor for supplying cooling medium to said slots and having an inlet for receiving cooling medium for flow in a generally circumferential direction within said scroll; characterised by
said scroll having a decreasing cross-sectional area in the direction of cooling medium flow within said scroll to substantially match the circumferential velocity of the cooling medium flow within the scroll to the tangential velocity of said rotor.

Thus, in a particular embodiment of the invention, a steam gland is provided with an axial inlet for receiving steam from foregoing, the steam gland includes an axial inlet for receiving steam from a suitable source and supplying the steam to a circumferential scroll about the rotor. Steam cooling entry slots are provided at circumferentially spaced locations about the rotor in a common plane in registry and communication with the scroll. Consequently, steam is supplied to the scroll and passes through the steam entry slots into a generally axially extending passage in the rotor for subsequent distribution to the rotating components of the rotor requiring cooling.

Particularly, the steam inlet scroll is varied in cross-section in a circumferential direction to produce a steam velocity that matches the rotor tangential velocity, thus minimizing pressure losses. Accordingly, the scroll cross-sectional area thus decreases in a circumferential direction to ensure the matching of the velocity of the steam in the scroll to the rotor surface tangential velocity thereby maintaining a generally constant pressure steam input about the circumference of the rotor. After the steam has passed into the rotor passage and cooled the hot gas path components, the spent steam returns through a central passageway along the rotor centerline for exit through an outlet steam pipe attached to the aft end of the steam gland and aligned with the rotor shaft axis.

On the aft side of the steam supply inlet scroll, there is provided a labyrinth-type seal. Inlet steam escaping past this aft seal axially outwardly in an aft direction combines with the spent return cooling steam in the outlet steam pipe for subsequent use, e.g., in a steam turbine. Forwardly of the inlet scroll, there is provided one or more labyrinth-type seals spaced axially one from the other with extraction ports spaced between them for extracting steam leaking past the labyrinth seals. For example, a pair of labyrinth-type seals are provided forwardly of the inlet scroll and an extraction port is provided between the pair of seals. The extraction port is maintained at a pressure lower than the steam inlet supply pressure so that leakage past the first seal of the pair of seals flows into this first extraction port. Additional seals may be provided forwardly of the pair of seals with an extraction port between axially adjacent seals maintained at a lower pressure for similarly extracting leakage steam past each seal. A final labyrinth-type seal is also provided having an extraction port between it and all other seals forwardly of the inlet scroll. The final extraction port is maintained at a sub-ambient pressure to draw both ambient air across the final seal and any leakage steam past the labyrinth seals into the final extraction port. This provides a final seal for any incidental steam leakage across the seals and precludes leakage of steam into the inner barrel cavity. Thus, steam is prevented from deleteriously affecting the instrumentation in the inner barrel cavity and also the rotor bearing.

Each seal includes a plurality of generally circumferentially extending segments, each of which has a plurality of axially spaced teeth projecting radially inwardly from the seal toward the rotor. Thus, the seal segments combine to provide a 360° sealing ring about the rotor. The tips of the teeth are spaced radially outwardly of the rotor. The seal segments are biased by springs between the segments and the stationary housing to provide a radial inward load and enables radial outward movement of the segments as necessary. Preferably, the steam gland is formed of a nickel-based alloy to prevent corrosion under operating steam conditions.

The invention will now be described in greater detail, by way of example, with reference to the drawings in which:
FIGURE 1 is a schematic illustration of a gas turbine incorporating the present invention;
FIGURE 2 is a schematic diagram of a combined cycle system incorporated in the present invention and employing a gas turbine and heat recovery steam generator for greater efficiency;
FIGURE 3 is a cross-sectional view of a portion of a gas turbine illustrating its combustion, compressor and turbine rotor sections;
FIGURE 4 is a schematic illustration of an aft portion of the rotor section of the gas turbine illustrating the cooling inlet and outlet for the cooling medium for the rotor and hot gas path components;
FIGURE 5 is an enlarged cross-sectional view of a cooling medium gland according to the present invention;
FIGURE 6 is a perspective view with parts broken away for ease of illustration of the cooling gland for transferring cooling medium from the inlet scroll into the rotor;
FIGURE 6A is a schematic cross-sectional view of the scroll illustrating its decrease in cross-sectional area in the circumferential direction of steam flow;
FIGURE 7 is a perspective view of the cooling medium gland illustrating an axial inlet and outlet for the cooling medium;
FIGURE 8 is an enlarged fragmentary cross-sectional view of a portion of the gland illustrating the sealing segments and taken generally about on lines 8-8 in Figure 5; and
FIGURE 9 is a cross-sectional view thereof taken generally about on line 9-9 of Figure 8.

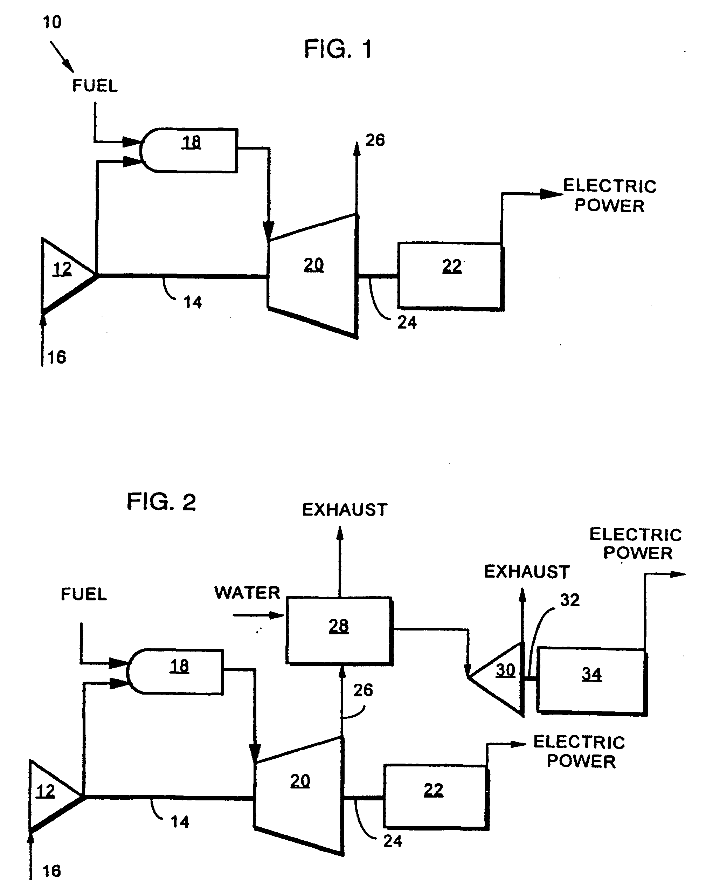

Figure 1 is a schematic diagram for a simple cycle, single-shaft heavy-duty gas turbine 10 incorporating the present invention. The gas turbine may be considered as comprising a multi-stage axial flow compressor 12 having a rotor shaft 14. Air enters the inlet of the compressor at 16, is compressed by the axial flow compressor 12 and is then discharged to a combustor 18 where fuel such as natural gas is burned to provide high-energy combustion gases which drive the turbine 20. In the turbine 20, the energy of the hot gases is converted into work, some of which is used to drive the compressor 12 through shaft 14, with the remainder being available for useful work to drive a load such as a generator 22 by means of rotor shaft 24 for producing electricity. A typical simple cycle gas turbine will convert 30 to 35% of the fuel input into shaft output. All but 1 to 2% of the remainder is in the form of exhaust heat which exits turbine 20 at 26. Higher efficiencies can be obtained by utilizing the gas turbine 10 in a combined cycle configuration in which the energy in the turbine exhaust stream is converted into additional useful work.

Figure 2 represents a combined cycle in its simplest form, in which the exhaust gases exiting turbine 20 at 26 enter a heat recovery steam generator 28 where water is converted to steam in the manner of a boiler. Steam thus produced drives a steam turbine 30 in which additional work is extracted to drive through shaft 32 an additional load such as a second generator 34 which, in turn, produces additional electric power. In some configurations, turbines 20 and 30 drive a common generator. Combined cycles producing only electrical power are in the 50 to 60% thermal efficiency range using the more advanced gas turbines.

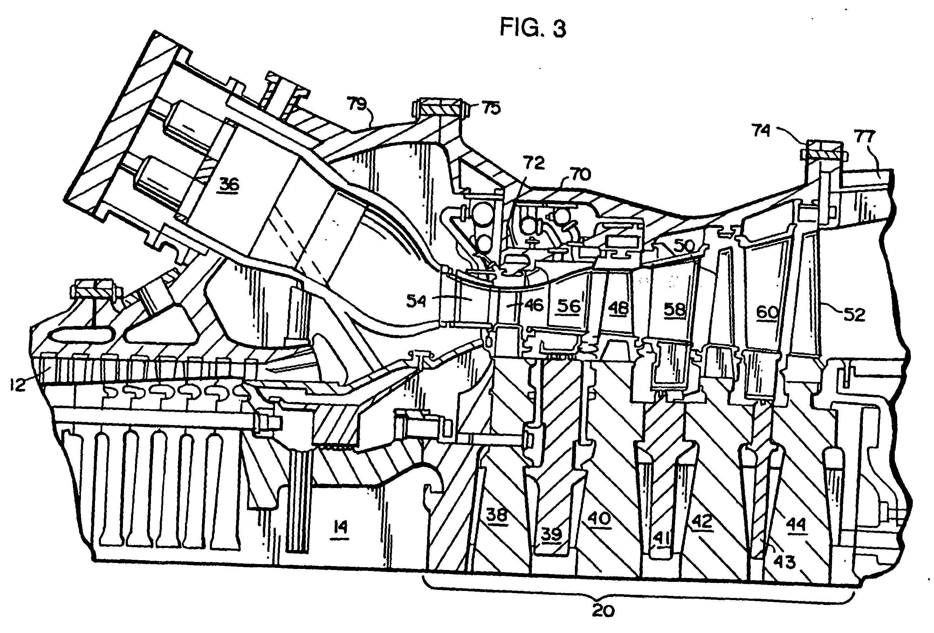

Figure 3 illustrates in greater detail a gas turbine which may be used in the combined cycle configuration of Figure 2. Air from the compressor 12 is discharged to the combustion cans comprising combustor 18, the combustion cans being located circumferentially about the rotor shaft 14 in the usual fashion, one such "can" being shown at 36. Following combustion, the resultant combustion gases are used to drive the turbine section 20, which includes in the instant example four successive stages represented by four wheels 38, 40, 42 and 44 comprising the turbine rotor and mounted to the rotor shaft 14 for rotation therewith, and each carrying a row of buckets represented, respectively, by blades 46, 48, 50 and 52, which are arranged alternately between fixed nozzles represented by vanes 54, 56, 58 and 60, respectively. The rotor also includes spacer discs 39, 41 and 43 alternately arranged between the bucket wheels. Thus, it will be appreciated that a four-stage turbine is illustrated wherein the first stage comprises nozzles 54 and buckets 46; the second stage, nozzles 56 and buckets 48; the third stage, nozzles 58 and buckets 50; and the fourth stage, nozzles 60 and buckets 52. As in the below-identified patent applications, the first and second stage nozzles 54 and 56 are mounted on an inner shell 72 pinned to an outer shell mounting the third and fourth stage nozzles. The outer shell is removable at the bolt flanges 74 and 75 bolting the outer shell to the turbine housing sections 77 and 79, respectively, whereby the upper outer shell and inner shells 72 are removable from the turbine for access to the hot gas path components.

For a generalized description of the state of the development of the turbine just described, reference is made to the following co-pending patent applications: Serial No. 08/414,698, entitled "Removable Inner Turbine Shell with Bucket Tip Clearance Control" (Attorney Docket No. 839-346); Serial No. 08/414,700, entitled "Closed Circuit Steam Cooled Bucket" (Attorney Docket No. 839-352); and Serial No. 08/414,697, entitled "Turbine Stator Vane Segments having Combined Air and Steam Cooling Circuits" (Attorney Docket No. 839-354).

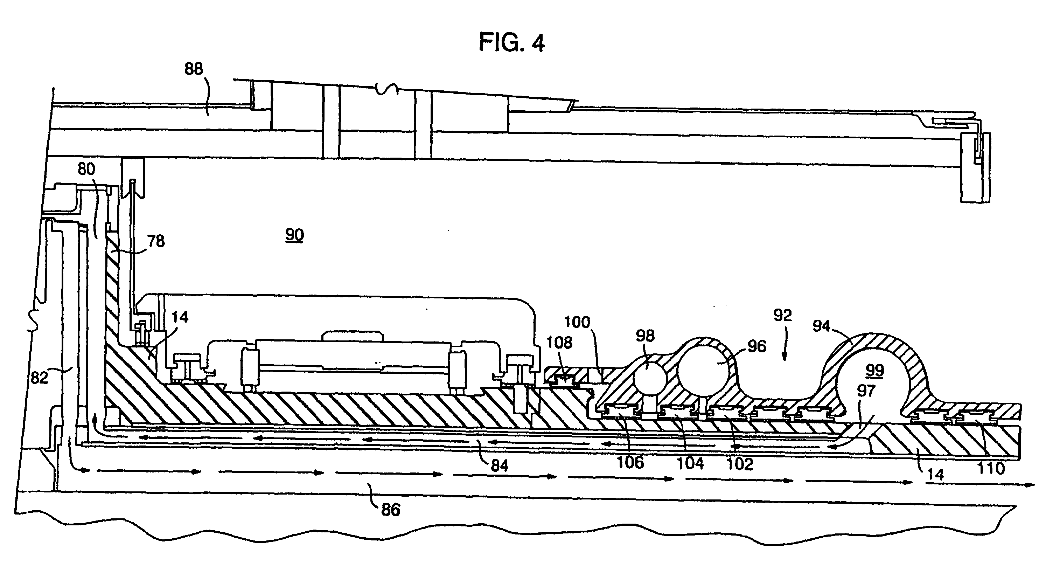

Referring now to Figure 4, there is provided an end disk 78 which includes cooling supply and return passages 80 and 82 in communication with the axial supply and return passages 84 and 86, respectively, through rotor 14. An exhaust frame inner housing barrel 88 forms a stationary part of the turbine surrounding a cavity 90 containing various instrumentation as well as the rotor bearing housing and in which cavity 90 is mounted a cooling medium transfer gland, generally indicated 92, according to the present invention. The fixed cooling medium gland 92 includes a cooling medium supply inlet scroll 94 and a plurality of extraction ports 96, 98 and 100 located forwardly along the gland 92 from the inlet scroll 94. First, second, third and fourth seals 102, 104, 106 and 108, respectively, are spaced axially along the gland 92 forwardly of the inlet scroll 94. A fifth seal 110 is disposed about the aft side of the gland 92 aft of the inlet scroll 94. The extraction ports 96, 98 and 100 are located between the seals 102, 104; 104, 106; and 106, 108, respectively.

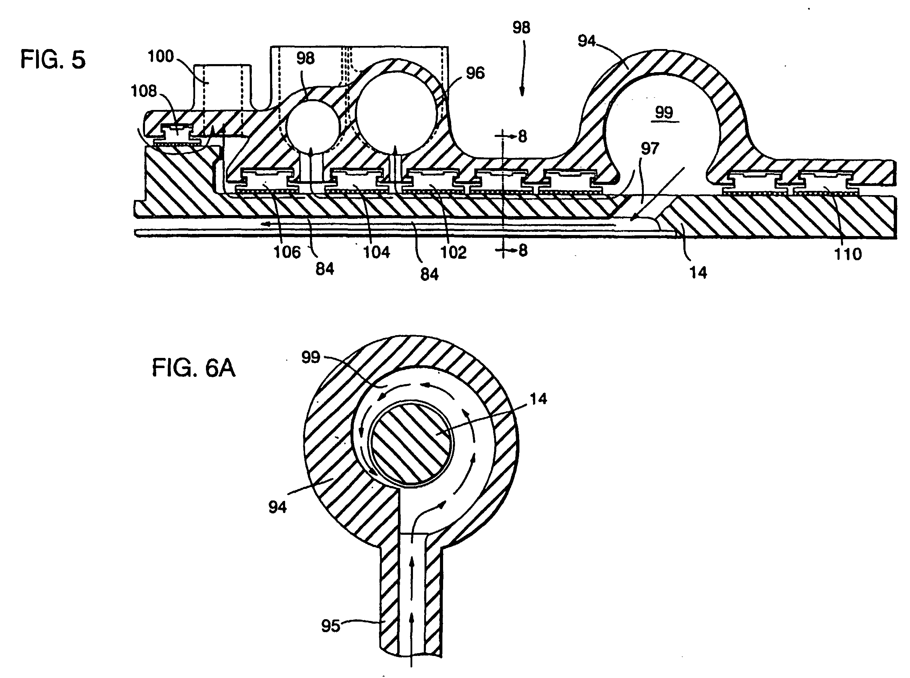

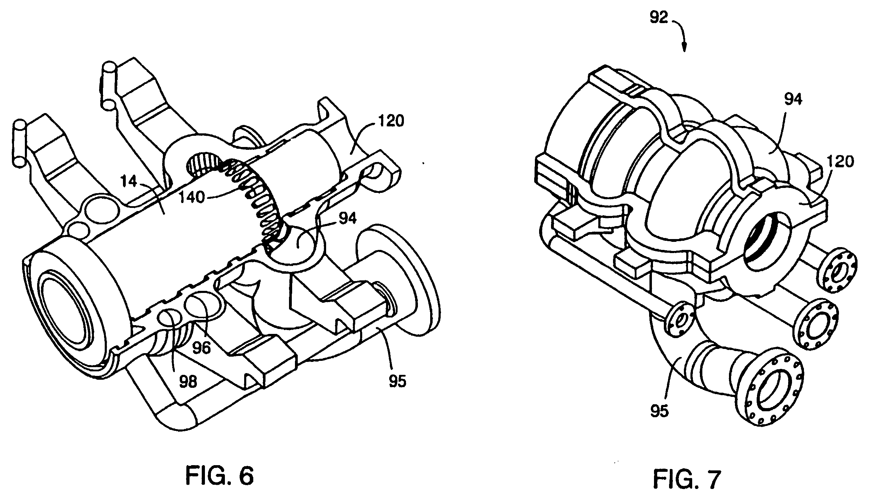

Scroll 94 has an axial inlet 95 (see Figures 6 and 7) which turns radially to supply the cooling medium, e.g., steam, to the scroll for flow in one circumferential direction about the scroll. The rotor has a plurality of circumferentially spaced, radially extending slots 97 (Figure 5) for receiving steam from scroll 94 and transferring the steam into the axial supply passage 84, the scroll having an exit slot extending a full 360° about the scroll in registration with the rotor and communication with slots 97. The scroll has an internal cross-section defining the circumferentially extending passage 99 which decreases in the direction of flow of the steam about the scroll to substantially preclude pressure losses as the steam enters the radial entry slots 97 of the rotor. The cross-sectional area of the scroll at each circumferential location can be determined from the desired mass flow of steam, its temperature and pressure, and the speed of the rotor, all known factors. Thus, the scroll decreases in cross-sectional area to maintain the velocity of the steam substantially matched to the surface speed of the rotor and hence minimizing or eliminating pressure losses in transferring steam from the fixed scroll to the rotor.

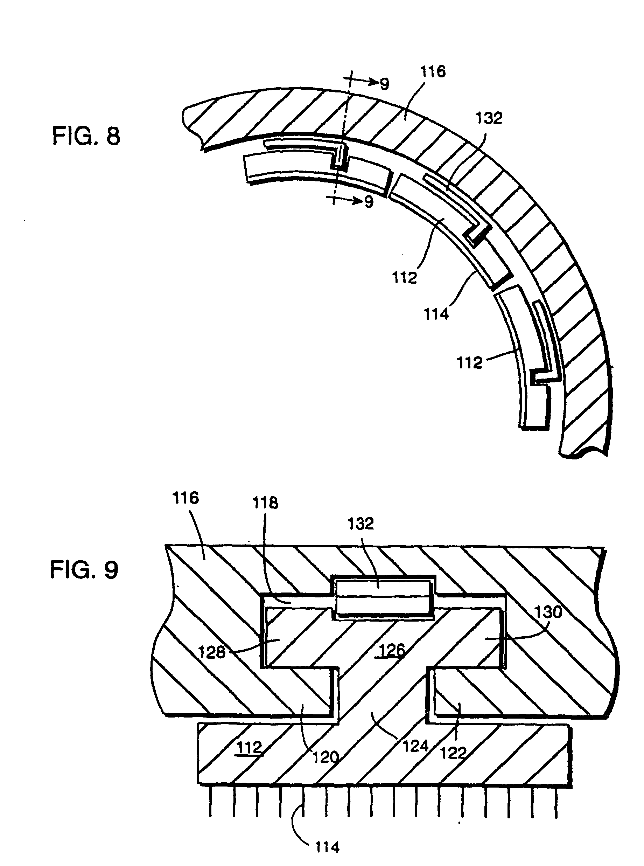

As best illustrated in Figures 8 and 9, each of the seals 102, 104, 106, 108 and 110 comprises a plurality of individual seal segments 112 disposed about the rotor 14 in circumferentially spaced relation one to the other. Each segment 112 includes a plurality of axially spaced, arcuately projecting labyrinth teeth 114 projecting radially inwardly from the arcuate segment 112 toward, but spaced from, the rotor 14 forming a labyrinth seal with the rotor 14. The seal housings 116 within gland 92 are provided with arcuate, generally T-shaped slots 118 and flanges 120 and 122 projecting axially toward one another. Each seal segment 112 includes a radially outwardly projecting neck portion 124 terminating in an enlarged head 126 having axially extending flanges 128 and 130 disposed in the T-shaped housing 118. Radial clearances are provided between the housing 118 and the flanges of the segments whereby the segments 112 can be displaced in the housing 118 in a generally radial direction. A spring 132 is provided between the housing and the radially outermost portion of the segments to bias the segments in a radially inward direction. Radially outward movements of the segments are therefore accommodated when necessary.

It will be appreciated that a cooling medium, preferably steam, is supplied the inlet scroll 94 from a suitable source at a predetermined pressure and passes into the plurality of circumferentially spaced, radially extending slots 97 for transfer into the axial supply passage 84. It will also be appreciated, particularly with the use of labyrinth-type seals, that there is leakage of the cooling medium, e.g., steam, past the seals 102, 104 and 106 and that such leakage steam must be prevented from entry into the exhaust frame inner barrel cavity 90. To preclude leakage into cavity 90, the one or more extraction ports forwardly of the inlet scroll 94 are maintained at a pressure lower than the predetermined pressure of the cooling medium supplied to the scroll 94. For example, extraction port 96, in the form of a scroll between seals 102 and 104, is coupled to a low-pressure steam turbine and is maintained at a pressure lower than the cooling medium supply pressure in inlet scroll 94 whereby leakage past the seal 102 will flow into the lower pressure scroll of extraction port 96. The extraction port 98 located between seals 104 and 106 is coupled, for example, to a steam seal regulator and is maintained at a pressure lower than the predetermined pressure of the steam supplied to scroll 94. Similarly, steam leakage past seals 102 and 104 flows into the extraction port 98 for removal. The extraction port 100 is coupled to a condensor and is maintained at or below ambient pressure. Thus, steam leakage past seals 102, 104 and 106 in a forward axial direction, combines with ambient air leakage past seal 108 in an aft axial direction for flow into and removal by the extraction port 100. Thus, final seal 108 removes any incidental or residual steam leakage across the seals 102, 104 and 106, consequently preventing steam leakage into the inner barrel cavity. It will be appreciated that the second extraction port 98 can be omitted, leaving only the first extraction port 96 maintained at a lower pressure than the inlet cooling medium supply pressure, followed by the extraction port 100, maintained at sub-ambient pressure. It will also be appreciated that extraction ports and labyrinth-type seals in addition to those illustrated can be provided between the inlet scroll and the final extraction port 100 as necessary.

It will be appreciated from a review of the drawing figures that the steam return 86 axially through the rotor passes through the end of the rotor (Figure 7). In Figure 7, the opening 120 at the aft end of the steam gland serves to carry the return steam to a steam return pipe (not shown). Leakage past the aft seal in the aft direction is combined with the spent cooling steam for flow to other parts of the system.

While the invention has been described in connection with what is presently considered to be the most practical and preferred embodiment, it is to be understood that the invention is not to be limited to the disclosed embodiment, but on the contrary, is intended to cover various modifications and equivalent arrangements included within the scope of the appended claims.

## Claims

1. A turbine, comprising:
a rotor (14) carrying hot gas path components for rotation about a rotor axis, said rotor (14) having a passage (84) for supplying a cooling medium to said components and a plurality of cooling medium entry slots (97) opening generally radially about said rotor (14) in communication with said rotor passage (84); and
a cooling medium gland (92) for transferring cooling medium from a fixed supply (28) to the passage of the rotating rotor (14);
said gland (92) including a cooling medium inlet supply scroll (94) about said rotor (14) for supplying cooling medium to said slots (97) and having an inlet (95) for receiving cooling medium for flow in a generally circumferential direction within said scroll (94); **characterised by**
said scroll (94) having a decreasing cross-sectional area (99) in the direction of cooling medium flow within said scroll (94) to substantially match the circumferential velocity of the cooling medium flow within the scroll (94) to the tangential velocity of said rotor (14).

2. A turbine according to Claim 1 wherein said cooling medium entry slots (97) lie in a plane normal to the axis of rotation of said rotor (14), said scroll (94) lying substantially in said plane.

3. A turbine according to Claim 1 or 2, wherein said scroll (94) is disposed about the rotor (14) such that the cooling medium is supplied to the cooling medium entry slots (97) in a substantially tangential direction relative to said rotor (14).

4. A turbine according to Claim 1, 2 or 3 including a pair of seals (102, 104) spaced axially forwardly of said scroll (94) and about said rotor (14); and at least one cooling medium extraction port (98) between the seals (102, 104) of said pair thereof maintained at a pressure sufficient to extract cooling medium leakage past a seal (102,104) of said pair of seals.

5. A turbine according to Claim 4 wherein each seal (102, 104) of said pair of seals includes a plurality of seal segments (112) disposed in a circumferential array about said rotor (14), each said segment (112) including a plurality of radially inwardly extending teeth (114).

6. A turbine according to Claim 5 including a spring (132) for each segment (112) for biasing each segment (112) radially inwardly.

## Patentansprüche

1. Turbine:
mit einem Rotor (14), der Heißgaspfadkomponenten um eine Rotorachse drehbar trägt, wobei der Rotor (14) einen Durchgang (84) zur Zuführung eines Kühlmediums zu den Komponenten und mehrere Kühlmediumeintrittsschlitze (97) aufweist, die im Wesentlichen in Radialrichtung münden und um den Rotor (14) herum in Strömungsverbindung mit dem Rotordurchgang (84) angeordnet sind; und
mit einer Kühlmediumstopfbuchse (92) zur Übertragung von Kühlmedium von einer festen Versorgung (28) zu dem Durchgang des umlaufenden Rotors (14);
wobei die Stopfbuchse (92) einen Versorgungsleitkranz (94) zur Zuleitung von Kühlmedium enthält, der um den Rotor (14) herum angeordnet ist, um Kühlmedium den Schlitzen (97) zuzuführen, und der einen Einlass (95) aufweist, um Kühlmedium zur Strömung in einer im Wesentlichen in Umfangsrichtung verlaufenden Richtung innerhalb des Leitkranzes (94) aufzunehmen; **dadurch gekennzeichnet, dass**
der Leitkranz (94) eine in der Richtung der Kühlmediumströmung innerhalb des Leitkranzes (94) abnehmenden Querschnittsfläche (99) aufweist, um die Umfangsgeschwindigkeit der Kühlmediumströmung innerhalb des Leitkranzes (94) im Wesentlichen an die tangentiale Geschwindigkeit des Rotors (14) anzupassen.

2. Turbine nach Anspruch 1, wobei die Kühlmediumeintrittsschlitze (97) in einer zu der Rotationsachse des Rotors (14) senkrechten Ebene liegen, wobei sich der Leitkranz (94) im Wesentlichen in dieser Ebene befindet.

3. Turbine nach Anspruch 1 oder 2, wobei der Leitkranz (94) um den Rotor (14) derart angeordnet ist, dass das Kühlmedium den Kühlmediumeintrittsschlitzen (97) in einer im Wesentlichen tangentialen Richtung in Bezug auf den Rotor (14) zugeführt wird.

4. Turbine nach Anspruch 1, 2 oder 3, die ein Paar Dichtungen (102, 104), die in Axialrichtung nach vorne von dem Leitkranz (94) beabstandet und um den Rotor (14) herum angeordnet sind, und wenigstens einen Kühlmediumentnahmekanal (98) zwischen den Dichtungen (102, 104) des Paars enthält, der bei einem Druck gehalten wird, der ausreichend ist, um einen Kühlmediumleckstrom durch eine Dichtung (102, 104) des Dichtungspaars abzuzapfen.

5. Turbine nach Anspruch 4, wobei jede Dichtung (102, 104) des Dichtungspaars mehrere Dichtungssegmente (112) enthält, die in einer in Umfangsrichtung ausgerichteten Anordnung um den Rotor (14) herum angeordnet sind, wobei jedes Segment (112) mehrere radial nach innen ragende Zähne (114) aufweist.

6. Turbine nach Anspruch 5, die eine Feder (132) für jedes Segment (112) enthält, um jedes Segment (112) radial nach innen vorzuspannen.

## Revendications

1. Turbine, comprenant :
un rotor (14) portant des composants de trajet de gaz chauds en rotation autour d'un axe de rotor, ledit rotor (14) comportant un passage (84) pour envoyer un milieu de refroidissement auxdits composants et une pluralité de fentes d'entrée de milieu de refroidissement (97) débouchant de manière générale radialement autour dudit rotor (14) en communication avec ledit passage de rotor (84) ; et
un presse-étoupe de milieu de refroidissement (92) pour transférer le milieu de refroidissement d'une alimentation fixe (28) au passage du rotor tournant (14) ;
ledit presse-étoupe (92) comportant une spirale d'alimentation en milieu de refroidissement (94) autour dudit rotor (14) pour fournir du milieu de refroidissement aux dites fentes (97) et comportant une entrée (95) pour recevoir du milieu de refroidissement destiné à s'écouler dans une direction globalement circonférentielle à l'intérieur de ladite spirale (94) ; **caractérisé en ce que** :
ladite spirale (94) a une aire de section transversale (99) décroissante dans la direction de l'écoulement du milieu de refroidissement à l'intérieur de ladite spirale (94) pour faire substantiellement correspondre la vitesse circonférentielle de l'écoulement du milieu de refroidissement à l'intérieur de la spirale (94) avec la vitesse tangentielle dudit rotor (14).

2. Turbine selon la revendication 1, dans laquelle lesdites fentes d'entrée de milieu de refroidissement (97) se trouvent dans un plan perpendiculaire à l'axe de rotation dudit rotor (14), ladite spirale (94) se trouvant substantiellement dans ledit plan.

3. Turbine selon la revendication 1 ou 2, dans laquelle ladite spirale (94) est placée autour du rotor (14) de telle manière que le milieu de refroidissement est fourni aux fentes d'entrée de milieu de refroidissement (97) dans une direction substantiellement tangentielle par rapport audit rotor (14).

4. Turbine selon la revendication 1, 2 ou 3 comportant une paire de joints (102, 104) espacés axialement en avant de ladite spirale (94) et autour dudit rotor (14), et au moins un orifice d'extraction de milieu de refroidissement (98) entre les joints (102, 104) de ladite paire maintenu à une pression suffisante pour extraire une fuite de milieu de refroidissement devant un joint (102, 104) de ladite paire de joints.

5. Turbine selon la revendication 4, dans laquelle chaque joint (102, 104) de ladite paire de joints comporte une pluralité de segments de joint (112) placés en un réseau circonférentiel autour dudit rotor (14), chacun desdits segments (112) comportant une pluralité de dents s'étendant radialement vers l'intérieur (114).

6. Turbine selon la revendication 5 incluant un ressort (132) pour chaque segment (112) pour solliciter chaque segment (112) radialement vers l'intérieur.
